# EUROPÄISCHE PATENTSCHRIFT

(11) **EP 3 976 987 B1**
(45) Veröffentlichungstag und Bekanntmachung des Hinweises auf die Patenterteilung: **13.12.2023**
(21) Anmeldenummer: 20730978.2
(22) Anmeldetag: 14.05.2020
(51) Int. Cl.: F16D 65/00, B62D 7/18, F16D 65/095

(54) **ACHSSCHENKEL EINES NUTZFAHRZEUGES**
STEERING KNUCKLE OF A UTILITY VEHICLE
PORTE-FUSÉE D'UN VÉHICULE UTILITAIRE

(30) Priorität: 24.05.2019 DE 102019113939
(43) Veröffentlichungstag der Anmeldung: 06.04.2022
(73) Patentinhaber: KNORR-BREMSE Systeme für Nutzfahrzeuge GmbH, 80809 München (DE)
(72) Erfinder: BLESSING, Michael, 80687 München (DE); GRUBER, Markus, 85560 Ebersberg (DE); KEMMLER, Stefan, 72070 Tübingen (DE); KLINGNER, Matthias, 82272 Moorenweis (DE); LACHERMEIER, Jakob, 85356 Freising (DE); PAHLE, Wolfgang, 83707 Bad Wiessee (DE); RUHL, Edgar, 85051 Ingolstadt (DE); TRIMPE, Robert, 82234 Weßling (DE); WERTH, Alexander, 80999 München (DE)
(86) Internationale Anmeldenummer: PCT/EP2020/063473
(87) Internationale Veröffentlichungsnummer: WO 2020/239461

(56) Entgegenhaltungen:
- EP-A2- 1 075 991
- WO-A1-2012/082020
- WO-A1-2016/153988
- WO-A1-2018/154502
- DE-A1-102004 034 565
- DE-A1-102015 204 739
- DE-A1-102015 210 969

## Beschreibung

Die vorliegende Erfindung betrifft einen aus einem Gussmaterial bestehenden Achsschenkel eines Nutzfahrzeugs gemäß dem Oberbegriff des Anspruchs 1.

Achsschenkel für Nutzfahrzeuge werden üblicherweise aus Stahl gefertigt, insbesondere aufgrund der großen, vielfältigen und wechselnden Lasten. Bei der Gestaltung von Schmiedebauteilen ist die Formgebung sowie Feingliedrigkeit üblicherweise stark beschränkt.

Solche Schmiedeachsschenkel bestehen für gewöhnlich aus einem einfachen Grundkörper mit daran angebrachten Zapfen sowie Armen, die üblicherweise geradlinig ausgeführt sind, da zur Herstellung der Form aus einem Schmiedegrundkörper (Rohling) wie beispielsweise einer zylindrischen Stange oder einem rechteckigen Balken in möglichst wenigen Hüben die gewünschte Geometrie durch Umformen erreicht werden muss.

Der Stahl erhält durch Legierungselemente sowie den Umformprozess seine hohe Belastbarkeit, ist aber in der Formgebung beschränkt und aufgrund der beim Schmieden erforderlichen Wärmeeinbringung in das Material und des Herstellungsprozesses sehr kostenintensiv.

Die hohe Belastbarkeit ist dabei notwendig, um Belastungen eines Seitencrashs aufnehmen zu können, bei dem ein Fahrzeugrad quer zur Laufrichtung an eine Kante wie beispielsweise einen Bordstein stößt. Eine solche Belastung wird insbesondere beim sogenannten Curb-Impact Test getestet, der ein Gleiten sowie den Aufprall des Nutzfahrzeugs senkrecht zur Fahrtrichtung auf einen Bordstein simuliert.

Um die oben genannte Nachteile zu vermeiden, ist aus der DE 10 2004 034 565 A1 ein aus Gussmaterial gefertigter Achsschenkel bekannt, der einen bereichsweise plattenförmig ausgebildeten Grundkörper aufweist, ein Achsschenkellager sowie eine nabenartige Aufnahme zur Aufnahme eines Wälzlagers und eines Achszapfens. An dem Achsschenkel ist außerdem eine Bremsträgerbrücke zur Aufnahme von beidseitig einer Bremsscheibe angeordneten Bremsbelägen angeformt.

Aus der WO 2018/154502 A1 ist ein Scheibenbremsen-Sattel und Naben-Klammer-Anordnung für eine Scheibenbremse bekannt, bei der Bremsbeläge beidseits einer Bremsscheibe über Belaghalterungsstifte in dafür vorgesehenen Bohrungen eines Sattelkörpers und seitlichen Bohrungen in Belagplatten der Bremsbeläge aufgehängt sind. Der Naben-Klammer-Körper der Anordnung umfasst auch Verbindungsstellen, welche dazu geeignet sind, die Anordnung mit den Aufhängungen oder mit der Lenkung des Fahrzeugs zu verbinden.

Aufgabe der vorliegenden Erfindung ist es, einen aus einem Gussmaterial bestehenden Achsschenkel eines Nutzfahrzeuges insbesondere hinsichtlich seines Gewichts und Stabilität derart zu verbessern, dass er der Belastung eines seitlichen Aufprall auch bei Temperaturen unter null, insbesondere bei Temperaturen unter -40° Grad Celsius, standhält.

Diese Aufgabe wird durch einen aus Gusseisen bestehenden Achsschenkel mit den Merkmalen des Anspruchs 1 gelöst.

Der erfindungsgemäße Achsschenkel weist einen Grundkörper, ein Achsschenkellager sowie eine nabenartige, zu einer Felge eines Fahrzeugrades offene topfförmige Aufnahme zur Aufnahme eines Wälzlagers und eines Achszapfens auf.

Der Achsschenkel weist des Weiteren eine Belagaufnahme zur Aufnahme eines Bremsbelags mit einem Auflager und zwei in Drehrichtung des Fahrzeugrades hintereinander angeordneten Stützelementen auf.

An dem Grundkörper des Achsschenkels ist des Weiteren eine Lenkeranbindung zur Anbindung eines Achslenkers sowie im Bereich des Achsschenkellagers eine mit Rippen versehene Einbuchtung angeformt. Eine Wand der mit Rippen versehene Einbuchtung bildet dabei einen Boden der topfförmigen Aufnahme zur Aufnahme des Wälzlagers und des Achszapfens.

Ein solcher Achsschenkel zeichnet sich durch seine große Formgebungsvariabilität aufgrund des Gussmaterial aus. Durch die Anformung einer Belagaufnahme und einer Lenkeranbindung ist eine einfache Montage ermöglicht, da die Lenkeranbindung und zumindest ein Teil eines der Belagaufnahme dienenden Bremsträgers nicht separat montiert werden müssen.

Darüber hinaus können Materialdoppelungen insbesondere im Bereich der Belagaufnahme und der Lenkeranbindung eingespart werden.

Vorteilhafte Ausführungsvarianten der Erfindung sind Gegenstand der Unteransprüche.

Nach einer vorteilhaften Ausführungsvariante der Erfindung ist die Lenkeranbindung seitlich des Achsschenkellagers, sich von dem Grundkörper erstreckend, angeformt.

Gemäß einer vorteilhaften Weiterbildung ist die Lenkeranbindung als aus einem Grundkörper des Achsschenkels vorstehender Arm mit einer Bohrung an dessen freiem Ende ausgebildet.

Nach einer weiteren vorteilhaften Ausführungsvariante weist der Grundkörper wenigstens eine Durchbrechung auf, was eine weitere Gewichtsoptimierung des Achsschenkels ermöglicht.

Durch die Anformung der Einbuchtung ist zum einen eine weitere Gewichtsoptimierung ermöglicht.

Die Ausformung mit Rippen gewährleistet die notwendige Stabilität des Achsschenkels.

Nach einer weiteren vorteilhaften Ausführungsvariante ist am Grundkörper im Bereich der Belagaufnahme zwischen den Auflagern eine Einbuchtung angeformt.

Auch diese Einbuchtung ermöglicht eine weitere Gewichtsoptimierung des Achsschenkels.

Der Grundkörper weist gemäß einer weiteren vorteilhaften Ausführungsvariante einen Übergriffsbereich zum Übergreifen einer Bremsscheibe auf.

In einer weiteren Ausführungsform ist die Lenkeranbindung im Bereich des Scheibenübergriffes angebracht.

Dieser Übergriffsbereich ist gemäß einer vorteilhaften Weiterbildung auf seiner dem Fahrzeugrad zugewandten Stirnfläche als Flansch zur Anbringung eines Teilstücks eines Bremsträgers ausgebildet.

Dies ermöglicht den variablen Einsatz eines solchen Achsschenkels sowohl für beidseitig einer Scheibenbremse anzubringende Bremsbeläge als auch für eine nur einseitige Anordnung solcher Bremsbeläge.

Nachfolgend werden bevorzugte Ausführungsbeispiele der Erfindung anhand der beiliegenden Zeichnungen näher erläutert. Es zeigen:
- Fig. 1 und 2: schematische perspektivische Darstellungen einer ersten Ausführungsvariante eines erfindungsgemäßen Achsschenkels aus unterschiedlichen Perspektiven,
- Fig. 3 und 4: den Fig. 1 und 2 entsprechende schematische perspektivische Darstellungen einer zweiten Ausführungsvariante eines erfindungsgemäßen Achsschenkels und
- Fig.5: eine schematische perspektivische Darstellung des in den Figuren 3 und 4 gezeigten Achsschenkels mit an diesem angeordneter Scheibenbremse.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Achsschenkels, des Grundkörpers, des Achsschenkellagers, der Aufnahme, der Belagaufnahme, der Lenkeranbindung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

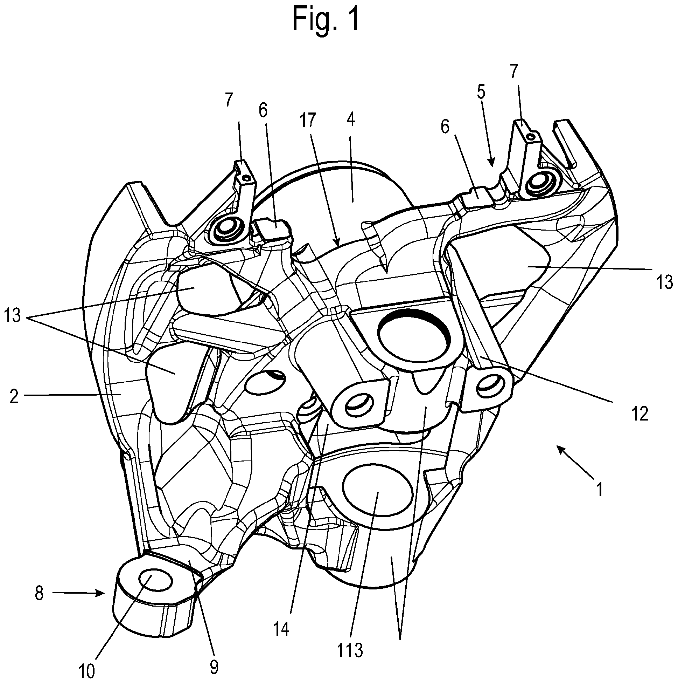

In den Fig. 1 bis 5 ist mit dem Bezugszeichen 1 insgesamt ein aus einem Gussmaterial bestehender Achsschenkel eines Nutzfahrzeuges bezeichnet.

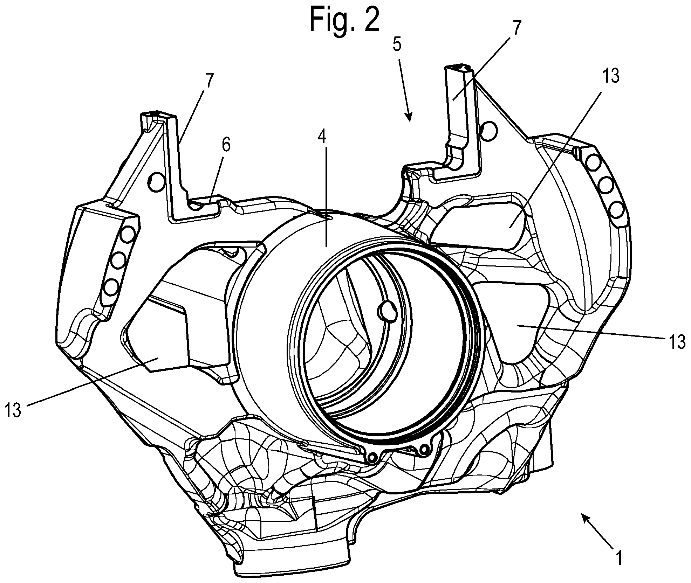

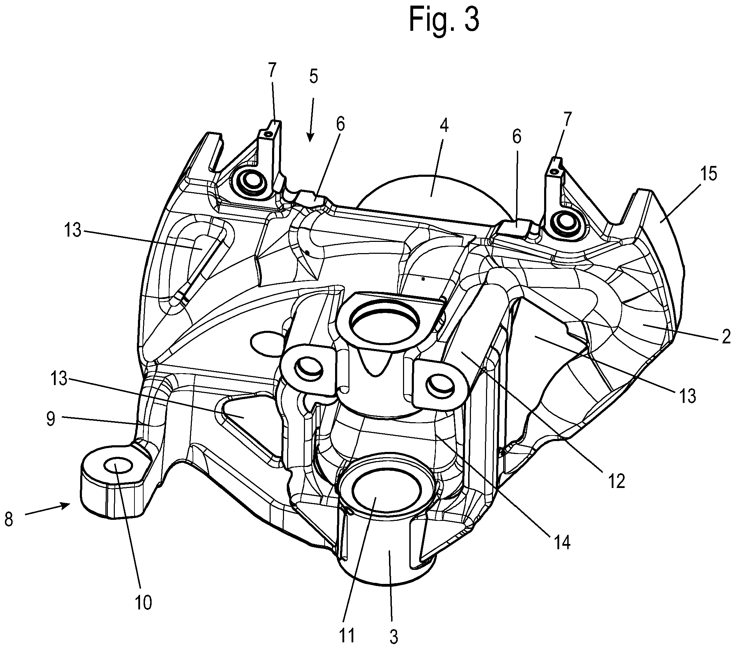

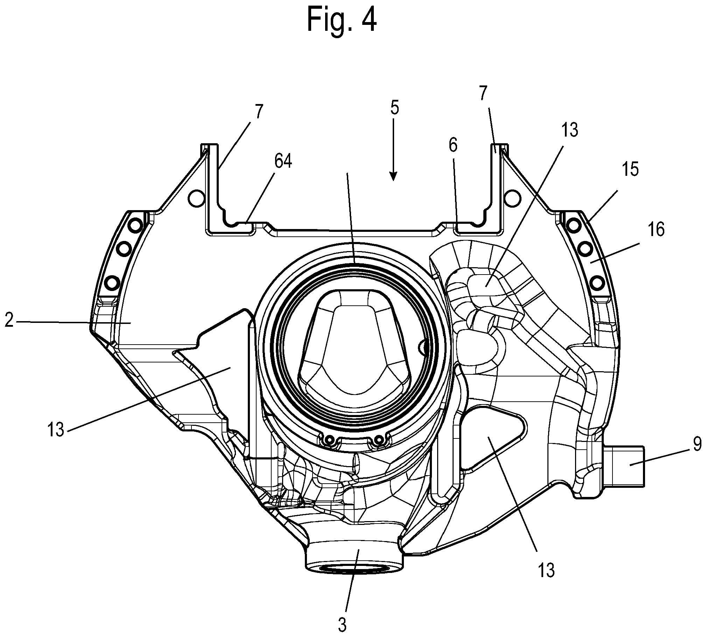

Die Fig. 1 und 2 zeigen dabei eine erste Ausführungsvariante eines solchen Achsschenkels 1, während die Fig. 3 und 4 eine alternative Ausführungsvariante eines erfindungsgemäßen Achsschenkels 1 zeigen.

Beide Ausführungsvarianten eines solchen Achsschenkels 1 weisen einen Grundkörper 2 auf, von dem sich ein Achsschenkellager 3 mit einem oberen und einem unteren Vorsprung 12 mit darin vorgesehenen Bohrungen 11 zur Aufnahme eines Zapfens zur drehbaren Ankoppelung an eine Radachse erstrecken.

Zur (nicht gezeigten) Radfelge hin erstreckt sich vom Grundkörper 2 eine nabenartige, zur Felge des Fahrzeugrades offene topfförmige Aufnahme 4. Die Aufnahme 4 dient der Aufnahme eines Wälzlagers und eines Achszapfens, der über Schrauben mit der Radfelge und bevorzugt auch der Bremsscheibe gekoppelt ist.

Wie den Fig. 1 bis 4 des Weiteren zu entnehmen ist, ist am Grundkörper 2 oberhalb des einen Vorsprungs 12, der der Aufnahme des Zapfens zur Festlegung der Fahrzeugachse dient, eine Belagaufnahme 5 zur Aufnahme eines Bremsbelags mit einem Auflager 6 und zwei in Drehrichtung des Fahrzeugrades hintereinander angeordneten Stützelementen 7 angeformt.

Die Stützelemente 7 sind dabei bevorzugt in Gestalt von Trägerhörnern geformt. Die Auflager 6 sind vor jeweiligen, einander zugewandten Innenseiten der Stützelemente 7 am Grundkörper 2 in Gestalt ebener Flächen angeformt, auf denen ein Bremsbelag zur Drehachse des Fahrzeugrads hin abstützbar ist.

Wie in den Fig. 1 und 2 gezeigt, ist zwischen den beiden Auflagern 6 eine Aussparung 17 angeformt, die im Wesentlichen der Gewichtseinsparung des Achsschenkels 1 dient.

Bei der in den Fig. 3 und 4 gezeigten Ausführungsvariante ist der Grundkörper 2 so geformt, dass zwischen den Auflagern 6 ein geradliniger Verbindungssteg angeformt ist, der durch eine Stufe relativ zu den Auflagern 6 leicht abgesenkt ist.

Wie den Fig. 1 und 3 außerdem zu entnehmen ist, ist an dem Grundkörper 2 eine Lenkeranbindung 8 zur Anbindung eines Achslenkers, beispielsweise eines Querlenkers oder einer Lenkstange angeformt. Die Lenkeranbindung 8 erstreckt sich dabei von dem Grundkörper 2 etwa seitlich des Achsschenkellagers 3 winklig zu den das Achsschenkellager 3 bildenden Vorsprüngen 12.

Die Lenkeranbindung 8 besteht dabei aus einem aus dem Grundkörper 2 des Achsschenkels 1 vorstehenden Arm 9, an dessen freiem Ende eine Bohrung 10 vorgesehen ist, in welcher ein Zapfen zur Anbindung an den Achslenker aufnehmbar ist.

Wie den Figuren 1 bis 4 weiter gezeigt ist, weist der Grundkörper 2 wenigstens eine Durchbrechung 13 auf. Bei den in den Figuren gezeigten Ausführungsbeispielen weist jeder der Grundkörper 2 eine Vielzahl solcher Durchbrechungen 13 auf.

Die Durchbrechungen 13 dienen zum einen der Gewichtseinsparung des Achsschenkels 1.

Gleichzeitig sorgt die dadurch gebildete Fachwerkkonstruktion des Grundkörpers 2 für eine bessere Ableitung der bei einem Bremsvorgang entstehenden Wärme, verursacht durch die Reibpartner Bremsscheibe und Bremsbelag.

Wie insbesondere in der Ausführungsvariante gemäß Fig. 3 gezeigt, ist am Grundkörper 2 im Bereich des Achsschenkellagers 3 eine mit Rippen versehene Einbuchtung 14 angeformt, die den Bereich zur Fahrzeugachse hin weisenden Teil des Achsschenkels 1 von dem Fahrzeugrad zugewandten Teil des Achsschenkels 1 trennt.

Die mit Rippen versehene Wand dieser Einbuchtung 14 bildet dabei gleichzeitig den Boden der Aufnahme 4 zur Aufnahme des Wälzlagers und des Achszapfens.

Radial zur Aufnahme 4 weiter außen zu den Stützelementen 7 ist am Grundkörper 2 ein Übergriffsbereich 15 zum Übergreifen einer (nicht dargestellten) Bremsscheibe angeformt.

Dieser Übergriffsbereich 15 ist, wie in den Fig. 2 und 4 gezeigt, auf seiner dem Fahrzeugrad zugewandten Stirnfläche 16 als Flansch zur Anbringung eines Teilstücks eines Bremsträgers ausgebildet.

Der aus Gussmaterial bestehende Achsschenkel 1 ist durch seine Formgestalt, insbesondere durch die nabenartige zur Felge des Fahrzeugrads offene topfförmige Aufnahme 4 zur Aufnahme des Wälzlagers und des Achszapfens, bei dem der Achszapfen sich zur Radfelge hin bevorzugt radial aufweitet, hinreichend stabil, um auch Belastungen eines Seitencrashs aufzunehmen, bei dem ein Fahrzeugrad quer zur Laufrichtung an eine Kante wie beispielsweise einen Bordstein stößt. Eine solche Belastung wird insbesondere beim sogenannten Curb-Impact Test geprüft, der ein Gleiten sowie den Aufprall des Nutzfahrzeugs senkrecht zur Fahrtrichtung auf einen Bordstein simuliert.

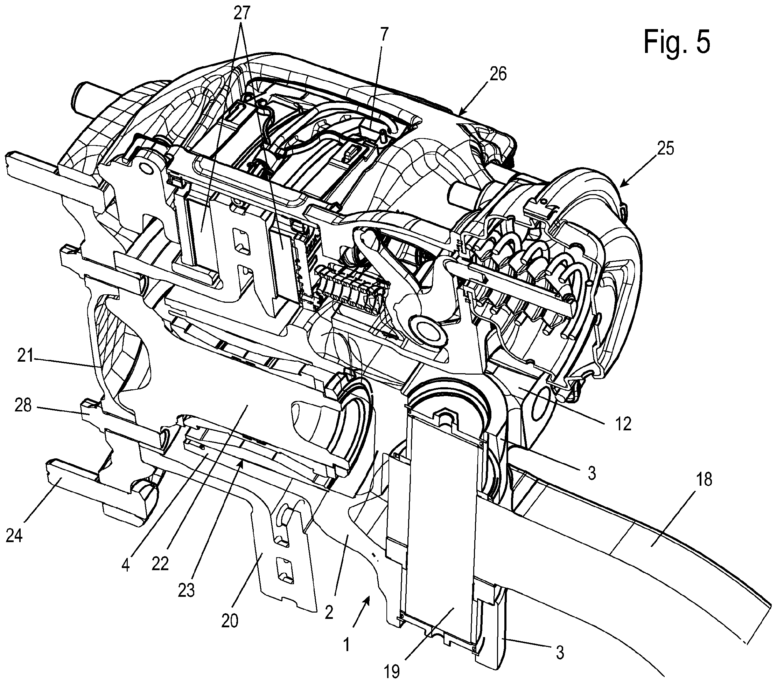

Figur 5 zeigt eine an einem in den Figuren 3 und 4 dargestellten Achsschenkel 1 angeordnete Scheibenbremse eines Nutzfahrzeugs sowie einen Wellenzapfen 23 und einen Radträger 21.

Der bevorzugt aus einem Sphäroguss gefertigte Achsschenkel 1 ist über das Achsschenkellager 3 mit einem Achsträger 10 um eine vertikale Drehachse gelenkig verbunden. Eine Bremsscheibe 2 übergreift dabei die nabenartige Aufnahme 4 des Achsschenkels 1.

Figur 5 zeigt des Weiteren einen Bremszylinder 25, einen die Bremsscheibe 2 überspannenden Bremssattel 26 und beidseits der Bremsscheibe 20 im Bremssattel 26 angeordnete Bremsbeläge 27. In dem Achsschenkellager 3 ist ein Achsschenkelbolzen 19 aufgenommen, der in einer Ausnehmung des Achsschenkellagers 3 drehbar gelagert ist.

Zur Anbringung eines Fahrzeugrades ist ein Radträger 21 vorgesehen, an dem mit einer Vielzahl von Radschraube 24 die Felge eines (nicht gezeigten) Fahrzeugrades montierbar ist.

Der Radträger 21 und die Bremsscheibe 20 sind, wie in Fig. 5 gezeigt, über ein Wälzlager 23 relativ zum Achsschenkel 1 um eine Raddrehachse drehbar gelagert. Dazu ist das Wälzlager 23 in der nabenartigen Aufnahme 4 des Achsschenkels 1 aufgenommen.

Wie in Fig. 5 weiter gezeigt ist, dient das Wälzlager 23 der Lagerung eines Wellenzapfens 22, der reibschlüssig an einem Lagerinnenring des Wälzlagers 23 anliegt. Der bevorzugt aus Gusseisen gefertigte Wellenzapfen 22 ist drehfest mit dem Radträger 21 verbunden.

Die Bremsscheibe 20 selbst weist einen Reibring und einen sich senkrecht zur Reibfläche des Reibrings erstreckenden Topf auf, dessen freies Ende zwischen einem Halsabschnitts des Radträgers 21 und einem Flanschbereich des Wellenzapfens 22 angeordnet ist. Die Bremsscheibe 20 weist weiter einen am Innenumfang des Topfes der Bremsscheibe 20 angeformten Flanschbereich auf, der mit Durchgangsbohrungen versehen ist, durch die Schrauben 28 reichen, die in den Flansch des Radträgers 21 eingeschraubt sind.

### BEZUGSZEICHENLISTE

- 1: Achsschenkel
- 2: Grundkörper
- 3: Achsschenkellager
- 4: Aufnahme
- 5: Belagaufnahme
- 6: Auflager
- 7: Stützelement
- 8: Lenkeranbindung
- 9: Arm
- 10: Bohrung
- 11: Bohrung
- 12: Vorsprung
- 13: Durchbrechung
- 14: Einbuchtung
- 15: Übergriffsbereich
- 16: Stirnfläche
- 17: Aussparung
- 18: Achsträger
- 19: Achsschenkelbolzen
- 20: Bremsscheibe
- 21: Radträger
- 22: Achszapfen
- 23: Wälzlager
- 24: Radschraube
- 25: Bremszylinder
- 26: Bremssattel
- 27: Bremsbelag
- 28: Schraube

## Patentansprüche

1. Aus einem Gussmaterial bestehender Achsschenkel (1) eines Nutzfahrzeuges, aufweisend
- einen Grundkörper (2),
- ein Achsschenkellager (3),
- eine nabenartige, zu einer Felge eines Fahrzeugrades offene topfförmige Aufnahme (4) zur Aufnahme eines Wälzlagers (23) und eines Achszapfens (22),
- eine Belagaufnahme (5) zur Aufnahme eines Bremsbelags (27) mit einem Auflager (6) und zwei in Drehrichtung des Fahrzeugrades hintereinander angeordneten Stützelementen (7),
wobei an dem Grundkörper (2) eine Lenkeranbindung (8) zur Anbindung eines Achslenkers angeformt ist, **dadurch gekennzeichnet, dass** im Bereich des Achsschenkellagers (3) eine mit Rippen versehene Einbuchtung (14) angeformt ist,
wobei die mit Rippen versehene Wand der Einbuchtung (14) einen Boden der topfförmigen Aufnahme (4) zur Aufnahme des Wälzlagers (23) und des Achszapfens (22) bildet.

2. Achsschenkel (1) nach Anspruch 1,
**dadurch gekennzeichnet, dass**
die Lenkeranbindung (8) seitlich des Achsschenkellagers (3) sich von dem Grundkörper (2) erstreckend angeformt ist.

3. Achsschenkel (1) nach Anspruch 1 oder 2,
**dadurch gekennzeichnet, dass**
die Lenkeranbindung (8) als aus einem Grundkörper (2) des Achsschenkels (1) vorstehender Arm (9) mit einer Bohrung (10) an dessen freiem Ende ausgebildet ist.

4. Achsschenkel (1) nach einem der vorstehenden Ansprüche,
**dadurch gekennzeichnet, dass**
der Grundkörper (2) wenigstens eine Durchbrechung (13) aufweist.

5. Achsschenkel (1) nach einem der vorstehenden Ansprüche,
**dadurch gekennzeichnet, dass**
am Grundkörper (2) im Bereich der Belagaufnahme (5) zwischen den Auflagern (6) eine Einbuchtung (17) angeformt ist.

6. Achsschenkel (1) nach einem der vorstehenden Ansprüche,
**dadurch gekennzeichnet, dass**
der Grundkörper (2) einen Übergriffsbereich (15) zum Übergreifen einer Bremsscheibe (20) aufweist.

7. Achsschenkel (1) nach Anspruch 6,
**dadurch gekennzeichnet, dass**
der Übergriffsbereich (15) auf seiner dem Fahrzeugrad zugewandten Stirnfläche (16) als Flansch zur Anbringung eines Teilstücks eines Bremsträgers ausgebildet ist.

## Claims

1. A steering knuckle (1), composed of a cast material, of a utility vehicle, having
- a main body (2);
- a steering knuckle bearing (3);
- a pot-shaped, hub-type receiver (4) that is open towards a rim of a vehicle wheel, for receiving a roller bearing (23) and an axle journal (22),
- a pad receiver (5) for receiving a brake pad (27), having a bearing face (6) and two supporting elements (7) that are arranged one after another in the direction of rotation of the vehicle wheel,
a control arm attachment (8) for attaching an axle control arm being moulded onto the main body (2),
**characterised in that**
formed in the region of the steering-knuckle bearing (3) is a recess (14) that is provided with ribs,
the wall of the recess (14) provided with ribs forming a base of the pot-shaped receiver (4) for receiving the roller bearing (23) and the axle journal (22).

2. A steering knuckle (1) according to claim 1,
**characterised in that**
the control arm attachment (8) is formed laterally in relation to the steering knuckle bearing (3) and extends away from the main body (2).

3. A steering knuckle (1) according to claim 1 or 2,
**characterised in that**
the control arm attachment (8) is configured as an arm (9) that projects from a main body (2) of the steering knuckle (1) and has a hole (10) through its free end (9).

4. A steering knuckle (1) according to any one of the preceding claims,
**characterised in that**
the main body (2) has at least one cut-out (13).

5. A steering knuckle (1) according to any one of the preceding claims,
**characterised in that**
a recess (17) is formed in the main body (2) in the region of the pad receiver (5) between the bearing faces (6).

6. A steering knuckle (1) according to any one of the preceding claims,
**characterised in that**
the main body (2) has an overlap region (15) for engaging over a brake disk (20).

7. A steering knuckle (1) according to claim 6,
**characterised in that**
the end face (16) of the overlap region (15) facing the vehicle wheel is configured as a flange for fitting a portion of a brake carrier.

## Revendications

1. Porte-fusée (1) en matériau coulé d'un véhicule utilitaire, comportant
- un corps (2) de base,
- un palier (3) de porte-fusée,
- un logement (4) de type moyeu, en forme de pot ouvert vers une jante d'une roue de véhicule, pour le logement d'un palier (23) à roulement et d'un tourillon (22) de fusée,
- un logement (5) de garniture, pour le logement d'une garniture (27) de frein, ayant un support (6) et deux éléments (7) d'appui, montés l'un derrière l'autre dans le sens de rotation de la roue du véhicule,
dans lequel
sur le corps (2) de base est formée une liaison (8) de bras pour la liaison d'un bras de fusée,
**caractérisé en ce que,**
dans la partie du palier (3) du porte-fusée est formée une bosse rentrante (14) pourvue de nervures,
dans lequel la paroi pourvue de nervures de la bosse rentrante (14) forme un fond du logement (4) en forme de pot pour le logement du palier (23) à roulement et du tourillon (22) de fusée.

2. Porte-fusée (1) suivant la revendication 1,
**caractérisé en ce que**
la liaison (8) de bras est formée en s'étendant à partir du corps (2) de base latéralement au palier (3) de porte-fusée.

3. Porte-fusée (1) suivant la revendication 1 ou 2,
**caractérisé en ce que**
la liaison (8) de bras est constituée sous la forme d'un bras (9) en saillie du corps (2) de base du porte-fusée (1) et ayant un trou (10) à son extrémité libre.

4. Porte-fusée (1) suivant l'une des revendications précédentes,
**caractérisé en ce que**
le corps (2) de base a au moins une découpure (13).

5. Porte-fusée (1) suivant l'une des revendications précédentes,
**caractérisé en ce qu'**
une bosse rentrante (17) est formée sur le corps (2) de base dans la région du logement (5) de garniture entre les supports (6).

6. Porte-fusée (1) suivant l'une des revendications précédentes,
**caractérisé en ce que**
le corps (2) de base a une partie (15) d'empiétement pour empiéter sur un disque (20) de frein.

7. Porte-fusée (1) suivant la revendication 6,
**caractérisé en ce que**
la partie (15) d'empiétement est constitué, sur son côté (16) frontal, tourné vers la roue du véhicule, sous la forme d'un collet de montage d'une pièce partielle d'un support de frein.
